# EUROPEAN PATENT APPLICATION

(11) **EP 2 698 769 A1**
(43) Date of publication of application: **19.02.2014**
(21) Application number: 13175942.5
(22) Date of filing: 10.07.2013
(51) Int. Cl.: G07C 5/00, G07C 5/08

(54) **Remote interaction with an electrically powered vehicle**

(30) Priority: 16.08.2012 GB 201214627
(71) Applicant: Penny & Giles Controls Limited, Dorset BH23 3TG (GB)
(72) Inventor: Taylor, David Huw, Sopley, Hampshire BH23 7AZ (GB); Fuller, Paul Anthony, Christchurch, Dorset BH23 4SS (GB)
(74) Representative: Malden, Nicholas

(57) **Abstract**

An access control device and access control method for an electrically powered vehicle such as an electric wheelchair are disclosed. The access control device comprises a data interface configured to exchange data with at least one component of the electrically powered vehicle and a webserver configured to generate a webpage incorporating that data, wherein the webpage is formatted for viewing on a web browser. The access control device also comprises a communication interface configured to provide the webpage to a web browser external to the electrically powered vehicle.

## Description

### FIELD OF THE INVENTION

The present invention relates to control devices for electrically powered vehicles, in particular those which allow configuration of the electrically powered vehicle.

### BACKGROUND OF THE INVENTION

It is known for a contemporary electrically powered vehicle such as an electrically powered wheelchair to exhibit a high degree of configurability. This configurability may for example relate to control parameters for the electrically powered vehicle such as a maximum speed setting, a maximum turning speed, and so on or may relate to the "internal" configuration of the components of the vehicle, for example in terms of software running on a processor embedded in the vehicle.

Further, such a vehicle is commonly provided with a controller via which the user is not only able to steer and drive the vehicle, but via which the user can also view and change various selectable settings for the vehicle. Hence the controller itself represents a component of the vehicle which is configurable (both in terms of stored parameters and in terms of firmware running on the controller, for example).

Previously the modification or updating of these changeable parameters has generally been carried out by a custom handheld device or a PC loaded with bespoke software that is connected to the controller via a custom interface and cable. Such an approaches is disadvantageous due to the necessity to use dedicated items of hardware (e.g. interface device and/or cable), together with the fact that particular items of custom hardware are expensive, liable to become outdated and make the service engineer reliant on particular components which may be difficult to replace.

US 8,073,585 discloses a method and apparatus for setting or modifying programmable parameters in a powered driven wheelchair, in particular where the operating instructions of the powered driven wheelchair may be updated by using portable storage media on to which a latest version of operating instructions is loaded to transfer the updated operating instructions to wheelchair controller memory.

It would be desirable to provide a technique which enabled such electronically powered vehicles to be more easily configured and maintained.

### SUMMARY OF THE INVENTION

Viewed from a first aspect, the present invention provides an access control device for an electrically powered vehicle, said access control device comprising:
a data interface configured to exchange data with at least one component of said electrically powered vehicle;
a webserver configured to generate a webpage incorporating said data, wherein said webpage is formatted for viewing on a web browser; and
a communication interface configured to provide said webpage to said web browser external to said electrically powered vehicle.

According to the present techniques, communication with the electrically powered vehicle takes place via the access control device. In particular, the access control device comprises a webserver which is configured to generate a webpage incorporating data it exchanges with at least one component of the electronically powered vehicle, the webpage being formatted for viewing on a web browser. The access control device has a data interface via which it can exchange data with at least one component of the electrically powered vehicle and a communication interface by which the webpage generated by the webserver can be communicated to a web browser external to the electrically powered vehicle. Hence, data taken from the component (for example current configuration parameters or diagnostic information) can be transmitted to the web browser for display, and conversely data provided by the web browser can be transmitted to the component (for example updated configuration parameters).

By providing in the access control device a webserver which presents the data from the electrically powered vehicle in a webpage format, various advantages with respect to the prior art are achieved. In particular, the device on which an external user (typically a service engineer) views the information retrieved from the electrically powered vehicle is no longer constrained to be of a particular type, as long as it is able to operate as a web browser and to display information presented in the form of a webpage. Moreover differences between device types such as the operating system they are running, or evolution of those operating systems, is no longer a concern. Additionally, not only may the traditional desktop PC or laptop be used for this purpose, but in particular more portable and intuitive contemporary devices such as tablets or smart phones may also readily be used. A further advantage is that the webpage formatted for viewing on a web browser may be provided to the web browser external to the electrically powered vehicle via a number of different communication channels (e.g. wired or wireless) and via a number of different communication protocols.

The access control device itself may take a number of forms, and in particular may form a permanent part of the electrically powered vehicle itself. However, in one embodiment the access control device is configured to be detachably connected to said electrically powered vehicle.

Accordingly, the access control device may be provided as a component which, under normal operating circumstances is not part of the electrically powered vehicle, but need only to be connected to the electrically powered vehicle when a user requires access to the configuration of the electrically powered vehicle. For example, when a service engineer wishes to view and/or amend the configuration of the electrically powered vehicle he can first connect the access control device to the electrically powered vehicle, for example by plugging the access control device into an available port on the vehicle such as a bus connector or interface. This has the advantage that one access control device maybe used to configure a number of electrically powered vehicles, so that for example a service engineer may be in possession of just a single access control device issued to him by the vehicle manufacturer which he may then use to configure a range of electrically powered vehicles for which he performs the servicing. As well as the convenience for the service engineer that this brings, there are clear cost savings in only having to provide one access control device for a number of different vehicles. Furthermore, the detachability of the access control device can in itself serve as an authentication barrier for accessing the configuration of the electrically powered vehicle, in that this access is only possible when the detachable access control device is connected to the electrically powered vehicle and hence another user who is not in possession of such an access control device cannot (whether inadvertently or maliciously) vary the configuration of the electrically powered vehicle.

It will be recognised that the access control device could be detachably connected to various different sub-components of the electrically powered vehicle, but in one embodiment said access control device is configured to be detachably connected to a control unit of said electrically powered vehicle. Connection of the access control device to a control unit allows for relatively direct physical access to the control parameters and data which are held within the control unit, thus facilitating the provision of such access in terms of the necessary bus connections and so on.

In providing such embodiments (in which the access control device is configured to be detachably connected to control unit of the electrically powered vehicle), the inventors have recognised that a given access control device may be connected to a number of different control units, which each may have different internal configurations. Accordingly, in one embodiment said access control device is configured, when connected to said control unit, to determine a type of said control unit and to cause said webserver to configure said webpage in dependence on said type. Hence, by determining the type of control unit and configuring the webpage to match, the user who is interacting with the web browser can be presented with an appropriate interface for that control unit, and moreover the data which is exchanged via the communication interface and the data interface can be appropriately formatted and presented for the particular control unit currently being accessed.

Whilst, as discussed above, the access control device may be detachably connected to the control unit, in some embodiments, said access control device is comprised within a control unit of said electrically powered vehicle. Thus, in such embodiments the access control device is essentially a part of the control unit and not necessarily physically distinct therefrom.

The communication interface via which the access control device communicates with the web browser may take a number of forms, but in one embodiment said communication interface is configured to provide said webpage to said web browser via a wireless communication protocol. This may be desirable because of the ease of connection via wireless communication (avoiding the use of cables and so on). This wireless protocol could take a number of forms, such as WiFi, Bluetooth, wireless USB, UWB and so on. Alternatively in another embodiment said communication interface is configured to provide said webpage to said web browser via a wired communication protocol, e.g. Ethernet. In some circumstances a wired communication protocol, i.e. used in a situation in which the access control device is coupled to the web browser via a wired connection (for example a serial bus), may be preferred, because of the inherent security and device identification which accompany the coupling of devices via a wired connection.

As mentioned above, the data exchange which takes place via the data interface may involve data flow in both directions. In other words, there are embodiments in which the webserver is configured to receive said data from said at least one component via said data interface (to then pass this on to the external web browser). There are also embodiments in which said webserver is configured to receive said data sent from said web browser via said communication interface and to provide said data to said at least one component via said data interface.

In providing the external user access to configuration parameters within the electrically powered vehicle, or merely to view data (whether this involves configuration parameters, logged performance information or other diagnostic information), it may be advantageous to differentiate between different categories of external user. For example, whilst the casual end user of the electrically powered vehicle might be allowed to view any data they care to request from the electrically powered vehicle, only a service engineer might be permitted to amend certain control parameters set with the electrically powered vehicle, and moreover only the original equipment manufacture (OEM) might be allowed to amend specific critical aspects of the configuration of the electrically powered vehicle (such as the firmware installed on it). Accordingly, in one embodiment said webserver is configured to restrict access to a selected webpage in dependence on an identified user level. Hence, different levels of access to data related to the electrically powered vehicle maybe provided in a number of corresponding webpages, wherein access to certain webpages is only granted to permitted authorised users. Hence any user might be permitted access to a top level of webpages providing information about the status, current configuration and so on of the electrically powered vehicle, but further webpages via which the configuration parameters may be adjusted may only be accessed by users permitted to make these changes.

Identifying given users may be carried out in a number of ways, but in embodiments, said identified user level is determined by at least one of: password entry; and connection of a detachable authenticating device to said access control device or said electrically powered vehicle. The password entry may for example be entered via the web browser, or alternatively (or in addition) using a simple interface such as a limited keypad on the control unit of the electrically powered vehicle. A detachable authenticating device (colloquially known as a "security dongle") may be provided to higher level users, the identification of which is carried out when the authenticating device is attached to the access control device or the electrically powered vehicle. It will be understood that the attachment of this device may be a physical plugging in (e.g. plugging a dongle into a USB port, charger socket, ReBUS connector, CAN bus port etc.), or may be virtual (eg. by Bluetooth), wherein the physical proximity of the dongle to the electrically powered vehicle is sufficient for authentication purposes.

In some embodiments said access control device is configured to store a unique identifier and to provide said unique identifier to said web browser upon request. The allocation of a unique identifier to the access control device allows an increased level of control over the interaction of the web browser and the access control device. In particular, this enables the web browser to determine that the correct access control device is communicating with the web browser. In a situation in which a service engineer has a number of electrically powered vehicles (e.g. in a workshop or show room) it is useful to be able to identify a specific electrically powered vehicle from amongst them.

Conversely, it may also be desirable for the access control device to limit its communication to recognised web browsers and hence in one embodiment said webserver is configured to provide an initialisation webpage to authenticate a device on which said web browser is running. This means that the user interacting with the web browser who wishes to interact with the access control device may be required to enter a password, identify themselves in some other way, or it may be that a unique identifier stored in the device on which the web browser is running is deemed to be sufficient authentication.

In some embodiments, said webserver is configured to provide additional webpages to said web browser, said additional webpages comprising user information related to said electrically powered vehicle. In other words, the webserver may not only provide the web browser with data retrieved from the electrically powered vehicle, but may itself store additional information which may be of benefit to the user (for example a user guide, manual or a tutorial) which can also be usefully presented to the user by means of the web browser interface.

Whilst the access control device may freely allow data to be exchanged via the data interface (possibly once a given user level has been authenticated), in some embodiments said access control device is configured to require user approval prior to allowing said data interface to exchange data with at said least one component of said electrically powered vehicle. Further, this user approval may be required each time new data is to be exchanged by the data interface, or the access control device may be configured to allow data exchange for a predetermined period, or to allow data updates from a predetermined source (e.g. always allowing firmware updates from the manufacture to be installed) and so on.

In order to provide diagnostic capability, in some embodiments the access control device further comprises a logging unit configured periodically to record data related to operation of said electrically powered vehicle, wherein said webserver is configured to generate a logging webpage incorporating said recorded data. Hence, various different kinds of data related to the operation of the vehicle can be recorded by the access control device and presented to the external user via the login webpage. Any data which may be of benefit to the external user seeking to monitor the performance of the electrically powered vehicle or to diagnose problems in its operation can be logged and exported in this manner. This data may be relatively simple status information or may be more detailed fault or error logs, instructions or usage data. In some embodiments the logging unit is configured to be programmed by said web browser. In other words the external user interacting with the web browser can navigate to a "logging device configuration" webpage and specify what data should be recorded by the logging device and when.

Whilst the access control device may be configured only to communicate with the external web browser, in some embodiments said communication interface is further configured to communicate with a remote webserver; and said webserver is configured to exchange further data with said remote webserver via said communication interface. The remote webserver may take a number of forms, but may particularly usefully be a webserver provided by the manufacturer of the electrically powered vehicle. This remote webserver then provides a centralised location in which the manufacturer can provide updates for the vehicles it has already manufactured and conversely gather data regarding the operation of those vehicles.

In some embodiments the interaction within the remote server may be independent of the web browser, for example in some embodiments the access control device is configured to autonomously download firmware updates from the remote server, but in some embodiments said exchange of further data with said remote webserver via said communication interface is controlled by said web browser. Accordingly, the interaction between the access control device and the remote webserver is then under the control of the user operating the web browser who may for example have intentionally navigated to a webpage provided by the remote webserver to look for update information or other useful data when interacting with the electrically powered vehicle.

Whilst the exchange of further data with the remote webserver may be direct in the sense that the access control device communicates with the remote server for example via the local router connecting to the internet, in some embodiments said exchange of further data with said remote webserver via said communication interface is routed via a device running said web browser. Accordingly, the access control device need only be configured to interact with the device running the web browser and may then make use of the ability of that device to communicate with further devices (such as the remote webserver). This further communication may for example be a wired internet connection, or may be via a mobile phone's network connection where the web browser is running on a mobile device.

Whilst the access control device may be configured generally to allow an exchange of further data with a remote webserver, in some embodiments said access control device is configured to seek user approval for said exchange of further data with said remote webserver. This user approval may be indicated via a control unit on the electrically powered vehicle or via the web browser. Furthermore, the user approval may be required for each exchange of further data (e.g. for each file which is to be sent to / received from the remote webserver), or the user approval may be determined once and then allow further data exchange e.g. for any updates from the remote webserver or any data exchange for a following predetermined time period and so on.

Viewed from a second aspect the present invention provides an access control device for an electrically powered vehicle, said access control device comprising:
data interface means for exchanging data with at least one component of said electrically powered vehicle;
webserver means for generating a webpage incorporating said data, wherein said webpage is formatted for viewing on a web browser; and
communication interface means for providing said webpage to said web browser external to said electrically powered vehicle.

Viewed from a third aspect the present invention provides an access control method for an electrically powered vehicle, said access control method comprising the steps of:
exchanging data via a data interface with at least one component of said electrically powered vehicle;
generating a webpage incorporating said data, wherein said webpage is formatted for viewing on a web browser; and
providing said webpage via a communication interface to said web browser external to said electrically powered vehicle.

### BRIEF DESCRIPTION OF THE DRAWINGS

The present invention will be described further, by way of example only, with reference to embodiments thereof as illustrated in the accompanying drawings, in which:
Figure 1A schematically illustrates a user holding a tablet device and interacting wirelessly with an access control device embedded in an electrically powered wheelchair in one embodiment;
Figure 1B schematically illustrates a user holding a tablet device and interacting via a wired connection with an access control device plugged into the control unit of an electrically powered industrial vehicle in one embodiment;
Figure 2A schematically illustrates an access control device plugged into a charger socket of a controller connected to a power module of an electrically powered vehicle in one embodiment;
Figure 2B schematically illustrates an access control device sharing a bus connection to a power module of an electrically powered vehicle with a control unit;
Figure 3 schematically illustrates in more detail the configuration of an access control device and a control unit in one embodiment;
Figure 4 schematically illustrates in more detail the configuration and context of both an embedded access control device and a detachable access control device in respective embodiments;
Figure 5A schematically illustrates a webpage presented to a user in one embodiment;
Figure 5B schematically illustrates another webpage presented to a user in one embodiment;
Figure 6 schematically illustrates a series of steps taken when a user seeks to interact with the access control device in one embodiment;
Figure 7 schematically illustrates a series of steps taken when a user wishes to view selected parameters of the electrically controlled vehicle via the access control device in one embodiment;
Figure 8 schematically illustrates a series of steps taken when a user wishes to modify selected parameters of the electrically powered vehicle via the access control device in one embodiment;
Figure 9 schematically illustrates the communication between an access control device, a web browser and a remote webserver in one embodiment;
Figure 10 schematically illustrates in more detail the configuration and context of a remote webserver, a local smart device and an embedded or detachable access control device in respective embodiments; and
Figure 11 schematically illustrates a series of steps taken when the access control device interacts with a remote webserver.

### DESCRIPTION OF EMBODIMENTS

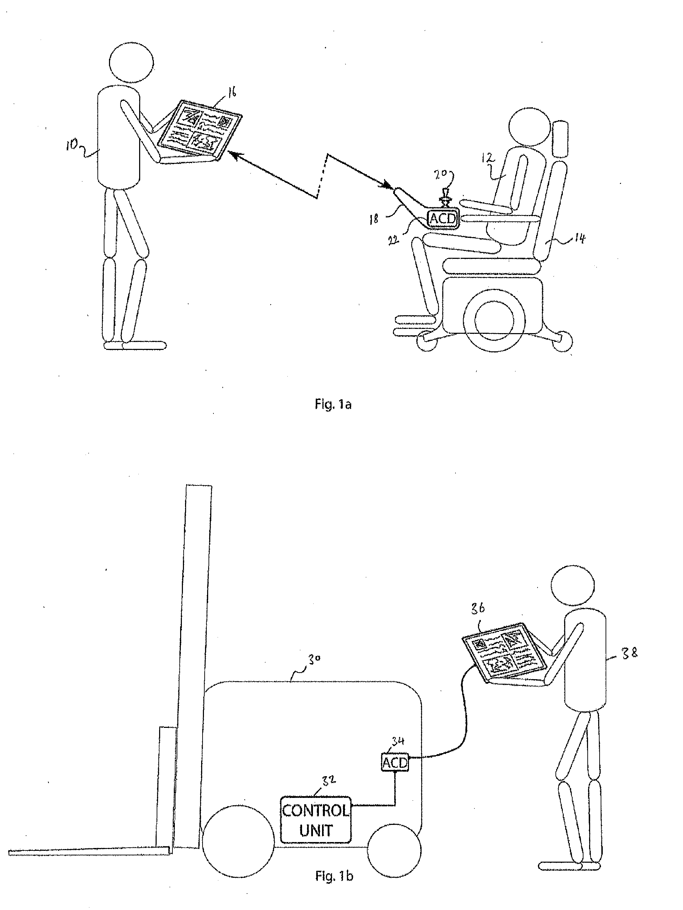

Figures 1A and 1B schematically illustrate two example embodiments. Figure 1A shows a scenario which a user 10 is holding a wirelessly enabled tablet 16 and a user 12 is seated in an electrically powered wheelchair 14. The electrically powered wheelchair 14 comprises a control unit 18, in particular having a a user input such as a joystick 20 via which the user 12 controls the wheelchair 14. Embedded within the controller 18 is an access control device (ACD) 22. The ACD 22 provides an interface via which the user 10 may interact with the electrically powered wheelchair 14, in particular to view current configuration values and parameters, together with other information relating to the current and recent performance of the wheelchair, as well as to be able to modify certain configuration values and parameters within the electrically powered wheelchair 14 in order to improve its performance for the benefit of the user 12. As will be discussed in more detail in the following, the ACD 22 comprises a webserver which generates webpages which incorporate data relating to the electrically powered wheelchair 14 and transmits these wirelessly to the wirelessly enabled tablet 16. It should be noted that although Figure 1A schematically illustrates a direct wireless connection between the tablet 16 and the ACD 22 (e.g. via Wi-Fi Ad-Hoc or Wi-Fi Direct), this connection may also be mediated via a local (or even embedded) router.

Figure 1B schematically illustrates another example embodiment, in this case the electrically powered vehicle being a fork lift industrial vehicle 30. The fork lift vehicle 30 also has a control unit 32 which is configured in particular to translate control signals from the user (not shown) into direct control of the electric motor etc. In the example shown in Figure 1B an ACD 34 has been plugged into the control unit 32 by the attendant engineer 38. Further, the engineer 38 is using a tablet device 36 coupled via a wired bus connection to the ACD 34 to interact with the control unit 32. Being detachable, the ACD 34 belongs to the "tool kit" of the engineer 38 who can plug this component into any one of the range of electrically powered industrial vehicles which he is required to service.

In both Figures 1A and 1B the respective users 10 and 38 are shown interacting with the electrically powered vehicles via a tablet 16, 36. However, it should be recognised that any device which can present the user with a web browser is suitable for the illustrated function and hence in other embodiments a desktop PC, a laptop, smartphone and so on may be used.

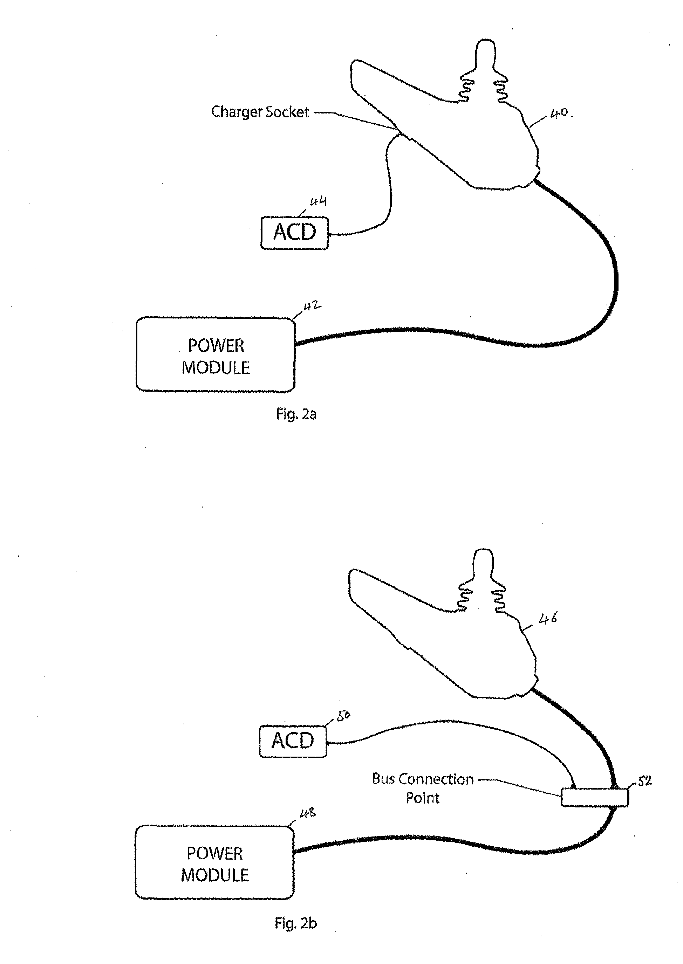

Figures 2A and 2B schematically illustrate two ways in which a separate ACD may be connected to an electrically powered vehicle. In the example shown in Figure 2A, the ACD 44 is plugged into the charger socket of a control device 40 (which includes a joystick for steering). The control device 40 is separately coupled to the power module 42 which converts the control signals received from the controller 40 into motor control signals, servo control signals and so on within the electrically powered vehicle. Accordingly, the user interacting with the ACD 44 may view (and perhaps modify) parameters both within the controller 40 and/or the power module 42 (as well as other components (not illustrated) of the electrically powered vehicle coupled to the controller 40). In the example illustrated in Figure 2B, the controller 46 is coupled to the power module 48 via a bus connection point 52, and the ACD 50 is also plugged into this bus connection point. Via this bus connection point 52, the ACD 50 can thus access both the controller 46 and the power module 48.

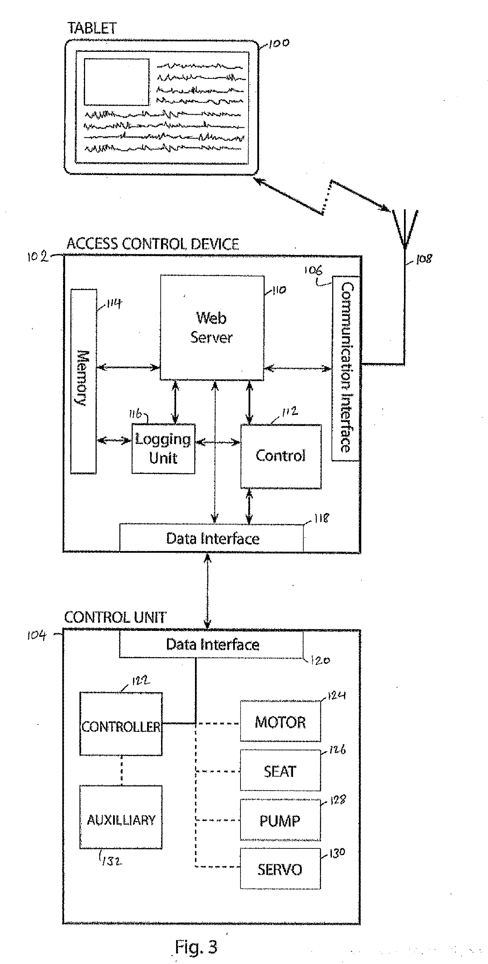

Figure 3 schematically illustrates a wirelessly enabled tablet 100 which is being used to communicate with an access control device 102 which in turn is exchanging data with a control unit 104 within an electrically powered vehicle in one embodiment. In this embodiment the ACD 102 is configured to communicate wirelessly with external devices (such as the tablet 100) and therefore the communication interface 106 in this embodiment is a Wi-Fi interface coupled to the antenna 108. The ACD 102 further comprises a webserver 110, a control unit 112, a memory 114, a logging unit 116 and a data interface 118. The overall operation of the ACD 102 is controlled by the control unit 112, which can steer and configure the operation of all sub-components of the ACD 102 (although direct connections between the control unit 112 and every component of the ACD 102 are not shown for clarity of illustration only).

The ACD 102 is connected via its data interface 118 to the control unit 104 (and in particular to the data interface 120 of the control unit 104). In turn the data interface 120 is connected (typically via an internal bus) to a controller 122 which is provided to allow the user of the electrically powered vehicle to exert control over various different components of the electrically powered vehicle. In the example embodiment shown in Figure 3, example components over which the user may seek to exert control are schematically illustrated as the motor 124, the seat 126, the pump 128 and the server 130. It should be appreciated that the motor 124, the seat 126, the pump 128 and the server 130 are not physically present within the control unit 104 but merely under the control thereof and are only illustrated therein in Figure 3 for convenience of illustration only. In practice the data interface 120 is coupled to the controller 122 via a local bus system and the other components are also coupled to this bus system. Other accessible components, such as a pump controller (generically labelled as "auxiliary 132" in Figure 3), may be directly connected to the controller 122 rather than via the bus system.

In operation, the user of the tablet 100 opens a web browser and via the web browser opens a webpage which is hosted by the webserver 110 within the ACD 102. The protocol used to communicate the webpage form the webserver 110 to the web browser can be http:, https:, ftp:, and so on. As will be discussed in more detail hereinafter, when the user first accesses this page, there may be some respective authentication between the tablet 100 and the ACD 102 to establish that the correct devices are communication with one another and that the required level of authorisation is granted. In essence, the webserver 110 generates webpages which contain content related to the electrically powered vehicle, which it passes to the communication interface 106 to be transmitted wirelessly via the antenna 108 to the tablet 100 for display. To generate the required webpage, the webserver 110 can request data to be retrieved from the control unit 104 via the data interfaces 118, 120. Additionally, the webserver may access the memory 114 within the ACD 102 in its generation of the webpage. The memory 114 can be used to store both static elements of the webpage (background, graphic elements, static text and so on) as well as further storage of previously retrieved data values from the control unit 104. To take a specific example, the user may use the browser on the tablet 100 to navigate to a page hosted by the webserver 110 relating to the current positioning of the seat 126. When this request is received from the communication interface 106, the webserver 110 requests the relevant data parameters via data interfaces 118, 120 and these data parameters are retrieved from the controller 122, this being the component which dictates the current positioning of the seat. Alternatively or in addition sensors within the seat 126 may be accessed to provide these data values as measured values. The webserver 110 then constructs a webpage representing the current position status of the seat and transmits this via communication interface 106 and antenna 108 to the tablet 100 for display to the user. In some embodiments the webpage presented to the user may be static, providing a snap shot of the relevant data values at a particular moment in resent history, but in other embodiments the webpage may be more dynamically presented (for example using client-side techniques such as Ajax to create asynchronous webpages). This can for example allow the user of the tablet 100 to dynamically monitor data values extracted from the electrically powered vehicle. In the example of displaying information related to the seat 126, as the seat is moved by the user seating in the wheelchair the updated positioning information generated by the attached sensors may be passed from the control unit 104 to the access control device 102 and the webserver can pass these updated aspects of the webpage via the communication interface 106 and antenna 108 to the tablet 100. Hence the user of the tablet 100 is presented with a dynamically refreshing view of the status of the relevant components of the electrically powered vehicle.

The ACD 102 is also provided with logging unit 116 which is configured to periodically store selected data values relating to the electrically powered vehicle in the memory 114. These may then be presented to the external user via a request for logged data sent to the webserver 110. The webserver 110 is configured to present a logging unit configuration page to the external user such that the external user can program the login unit to specify which data values should be recorded and how frequently.

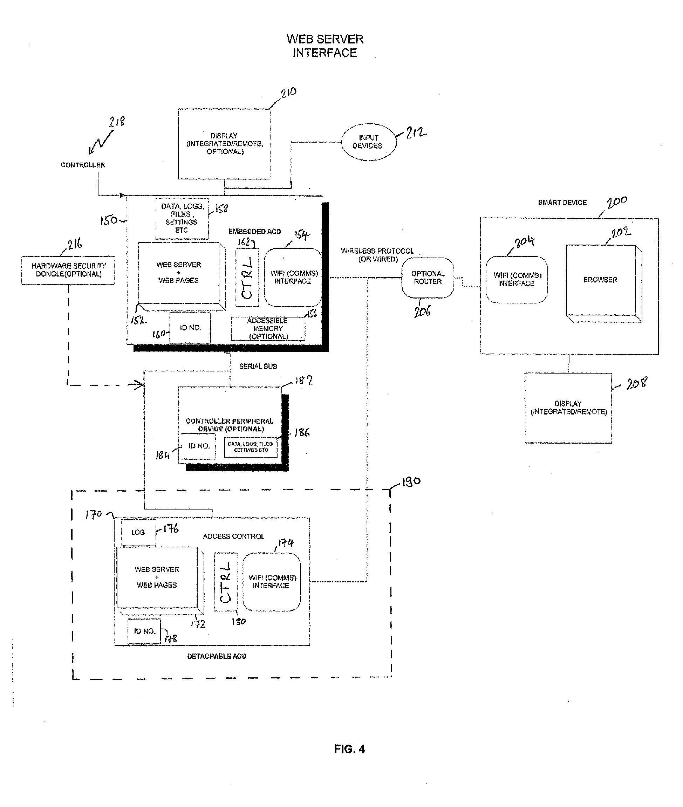

Figure 4 schematically illustrates further configuration details relating to an access control device providing information related to an electrically powered vehicle to a nearby smart device running a browser. In fact, Figure 4 illustrates two alternative embodiments, a first in which the access control device is an embedded ACD 150, this embedded ACD 150 forming a permanent part of the electrically powered vehicle, and an second alternative embodiment where the access control device is a detachable ACD 170 configured to be plugged into the electrically powered vehicle when access to its configuration and parameters are required (and detached at other times). The embedded ACD 150 embodiment comprises the embedded ACD 150 itself, which communicates via a wireless protocol (or wired in other embodiments) with a smart device 200, which is capable of running a web browser to and is provided with a Wi-Fi communication interface 204. The Wi-Fi communication interface 204 is an integrated part of the ACD 150, but in other embodiments the Wi-Fi communication interface may be provided in another part of the system, or even as a detachable device plugged into the system. The wireless communication between the embedded ACD 150 and the smart device 200 may also take place via router 206. Web browser formatted information transmitted from the ACD 150 to the smart device 200 is displayed to the user on the display 208 which typically forms part of the smart device 200.

The embedded access control device 150 is configured much as the access control device 102 of Figure 3 in that it has a webserver 152, a control unit 162 and a Wi-Fi communication interface 154. Additionally highlighted here are the locally stored data logs, files, settings etc. 158 which the webserver 152 accesses as part of generating the required webpages for provision to the smart device 200. It will be understood that item 158 is therefore also local storage for the web server 152. Additionally, the embedded ACD may have access to an additional memory 156 (although this is optional) this memory being provided as a static item of hardware or as a removable component such as a flash memory device (e.g. SD card). This removable memory can be arranged for security purposes such that it may only be accessible by removing a sealed panel in the controller or peripheral.

Finally, the embedded ACD 150 also holds an ID number 160 which it can provide on request to external devices, this ID number enabling external devices to identify the access control device uniquely. In this embodiment this ID takes the form of a serial number or subsequently programmed unique identifier allocated to the ACD 150. The ID number may also be complemented by device type, version number and other information detailing the particular ACD or the controller it is embedded in.

In an alternative embodiment (illustrated by the dashed box 190) the access control device is a detachable ACD 170, which is temporally plugged into the electrically powered vehicle. In particular as shown in Figure 4 the ACD 170 is coupled to the local serial bus, enabling communication with other components of the electrically powered vehicle to take place. Various different protocols for such a serial bus are of course possible, such as CAN, RS232, SPI, I2C etc.). The detachable ACD 170 is configured in essentially the same way as embedded ACD 150 (having webserver 172, Wi-Fi interface 174, logging storage 176 and ID number 178 which correspond directly to the equivalent components shown in the embedded ACD 150) and the description thereof is not repeated here for brevity. One feature which is particular to the ACD 170 is that it is compatible with a number of different vehicle systems, in particular with a number of different controllers, and is configured, on being plugged into a particular (say) controller to interrogate that device to determine its type and then to configure itself on that basis, such that the webpages presented to the external user are adapted to the device to which the ACD 170 is providing access.

A further optional device which may be connected to the local serial bus is the controller peripheral device 182 which is configured to hold a unique ID number 184 and to store data, logs, files, settings etc in memory 186. The controller peripheral device represents a separate module within the system that can be communicated with either directly or indirectly (motor 124, seat 126, pump 128 and servo 130 shown in Figure 3 are examples of this controller peripheral device 182).

Other components which may also be coupled to the local serial bus include a display 210 which may for example form part of the controller (e.g. controller 18 in Figure 1A) or may be elsewhere on the electrically powered vehicle or even a separate remote component. Whilst this display will generally be used by the controller to present relevant information to the user of the electrically powered vehicle whilst in use, when an external user is interacting via a connected smart device, this display 210 may be used to inform the user of the electrically powered vehicle of that interaction taking place, to ask for permission for various data to be exported from the electrically powered vehicle, or to ask for permission for parameters or configuration settings to be changed on the electrically powered vehicle. This display may be a simple character display or a more complex graphics display.

Particular functions for which this display may for example be used are to:
- Display the operating status of the controller 218 and/or the status of the WiFi connection to the smart device 200 and/or the security dongle 216;
- Prompt a user to take or initiate an action such as enabling connection to the WiFi enabled smart device 200 and/or security dongle 216;
- Prompt a user to take some action related to the maintenance or operation of the vehicle, such as arrange for a service;
- Prompt a user to take or initiate an action such as agreeing to data being exchanged between the smart device 200 and the ACD, and whether in future the exchange may be automatic or user restricted;
- Prompt the user to agree that data extracted from the controller may be forwarded to a web site or email address;
- Display information sent from the OEM for displaying to the user.

The above-mentioned user prompts may generated within the controller 218 or may be communicated to it via the WiFi enabled smart device 200. Various input devices 212 may also be coupled to the serial bus such as a joystick or keyboard pad to enable the user to select options, confirm choices and so on.

Access to the configuration data of the electrically powered vehicle may be protected in various ways, one of these being the provision of a hardware security dongle 216 which is detachably connected to the serial bus (e.g. via an available serial port) wherein the ACD (150 or 170) is configured only to allow certain activities (especially the modification) with respect to configuration parameters of the electrical powered vehicle when the hardware security dongle is present. The hardware security dongle may also be deemed to be "present" in other ways such as wirelessly by Bluetooth, being then only required to be within the proximity of the access control device.

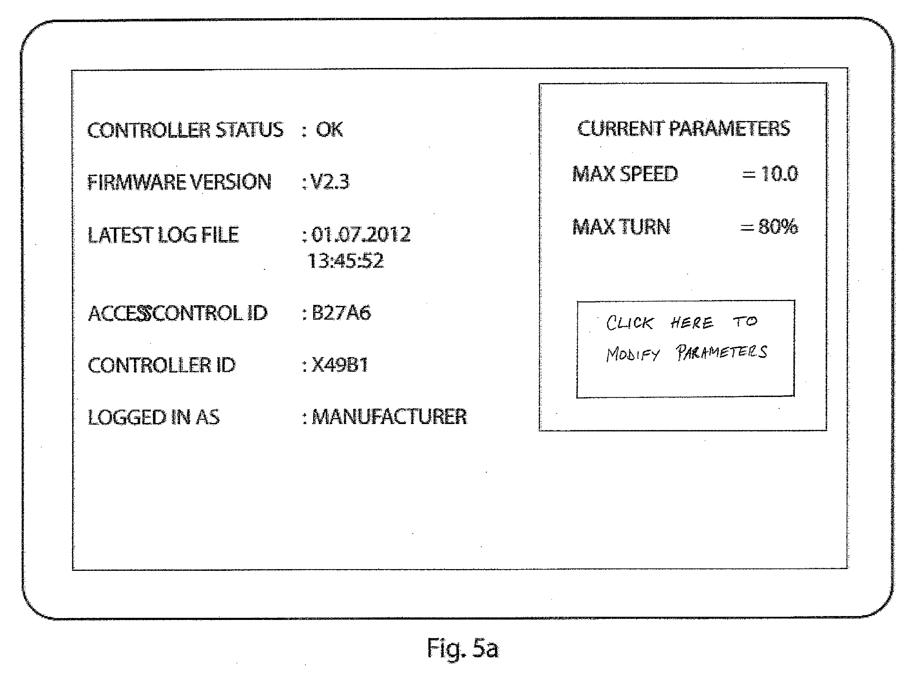

Figure 5A illustrates a "screen shot" showing a relatively simple example of a webpage which may be presented to an external user. On the left are displayed various high level items of information relating to the controller, whilst on the right two current parameters are shown, namely the maximum speed on the electrically powered vehicle and the maximum turn rate of the electrically powered vehicle. In this example, the information presented is static, i.e. there is no continual updating of the presented values. In other embodiments a more continuous display of parameters such as vehicle speed, user settings, peripheral status and battery state is provided. Additionally, the right hand panel shown in Figure 5A presents a button to the user ("Click here to modify parameters") which is shown because the user is logged in with "manufacturer" status and is therefore allowed to do this. Conversely, if the user was only logged in as "regular user" then this button would not be present.

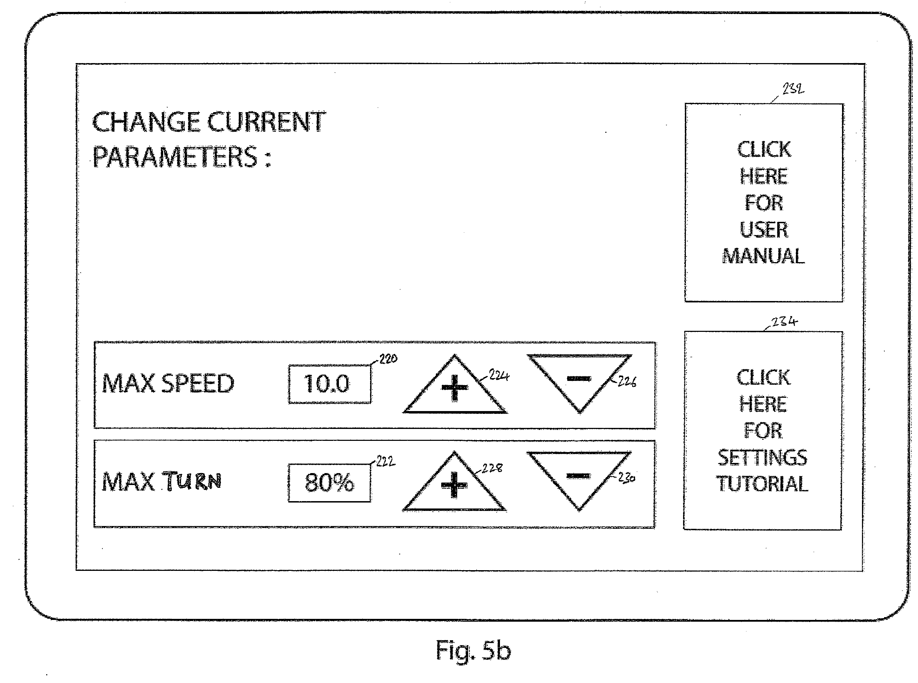

Figure 5B illustrates a simple example of a webpage presented to the authorised user who clicks on the parameter modification button in the webpage shown in Figure 5A. The user is presented with a display showing the current maximum speed value 220 and the current maximum turn value 222. The user can then incrementally increase or decrease those values using the respective buttons 224, 226, 228 and 230. In this illustrated embodiment the updating of these current parameters takes place dynamically in that as these buttons are pressed the new values are immediately transmitted to the access control device and from there to the relevant storage location within the electrically powered vehicle. However, in other embodiments a more static arrangement for this webpage is also contemplated, namely one in which the values are first set to the desired value on the webpage and only thereafter (e.g. by means of a "Confirm" button - not shown) are sent to the access control device once the user has decided on a final value. Figure 5B also illustrates two additional buttons (on the right hand side of the figure) which offer the user the opportunity to be presented with a user manual (button 232) or to be taken through a settings tutorial (button 234). Clicking one of these causes the access control device to retrieve a locally stored set of information (i.e. a user manual or a settings tutorial in this example) and to transmit them for display on the web browser.

Other more dynamic webpages which may be displayed may allow more instantaneous control of components of the vehicle. For example in the example of an electric wheelchair, particular webpages (accessible only to suitably authorised external users) allow control over the driving functions or seat positioning controls of the wheelchair to be delegated to the user holding the device running the browser. This may be particularly useful where the user of the wheelchair has limited physical capability, and would benefit from a third party (such as an attendant carer) being able to step in and take over control of the wheelchair when circumstances make this desirable.

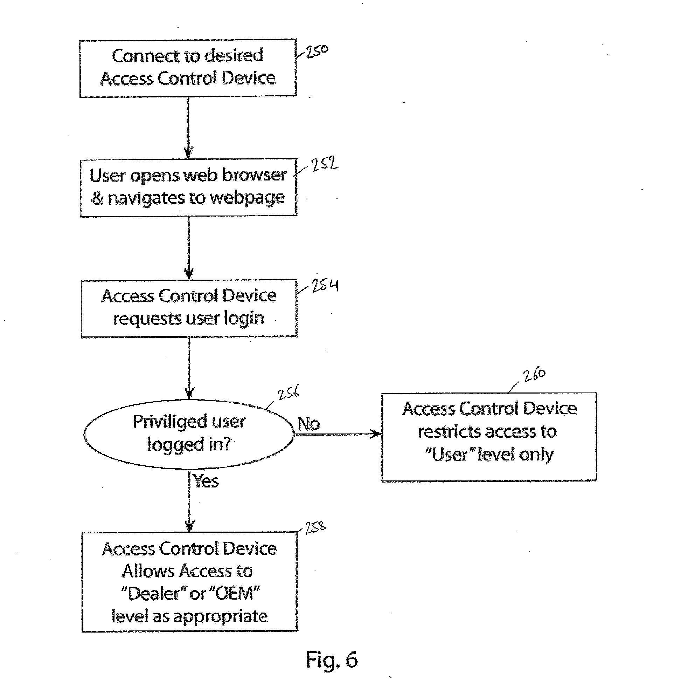

Figure 6 schematically illustrates a series of steps taken when a user wishes to open a web browser on the smart device 200 (see Figure 4) and navigate to the relevant webpage for interaction with the access control device (e.g. by clicking on a stored bookmark). Firstly (step 250) a connection to the desired access control device is established. This may include determining whether an access control device is within Wi-Fi range, and offering the user the choice to connect to that device, or if there is no recognisable access control device within range reporting this to the user. If the device on which the web browser is running is able to detect the presence of an access control device, then the user is informed of the identity of this access control device and confirms that communication with this access control device is desired. If there is more than one access control device accessible (as may for example be the case of a manufacturer's workshop or a dealer's show room) then the user selects one of the access control devices. At step 252, the user opens the web browser on the device and navigates to the relevant webpage. At step 254 the access control device responds to the interaction request from the user by requesting user login. The level of user login is then determined (step 256) and if this is one of the privileged user levels then the flow proceeds to step 258, where the access control device allows access to dealer or original equipment manufacture (OEM) level webpages as appropriate. However, if no privileged user login is provided then the flow proceeds to step 260 where the access control device restricts access to user level information only.

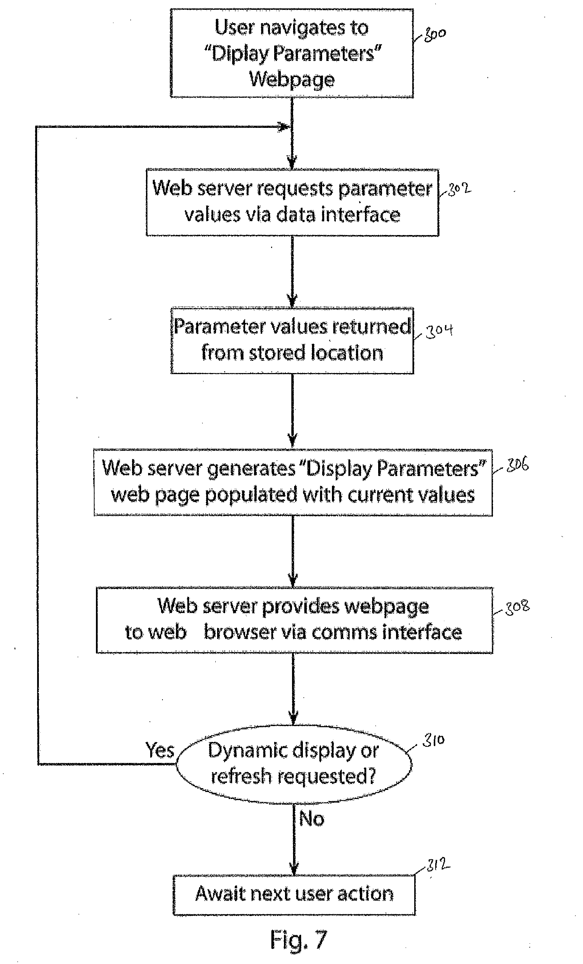

Figure 7 schematically illustrates a series of steps taken when a user navigates to a "display parameters" webpage (step 300). When this happens, the webserver requests the relevant parameter values via the data interface at step 302 and at step 304 those parameter values are returned from their stored location. At step 306 the webserver generates the requested webpage populating it with the current values of these parameters. This webpage is then provided by the webserver via the communications interface to the web browser (step 308). If the display of the webpage is configured to be dynamic or if a refresh is requested (step 310) then the flow returns to step 302. Otherwise the next user action is awaited at step 312.

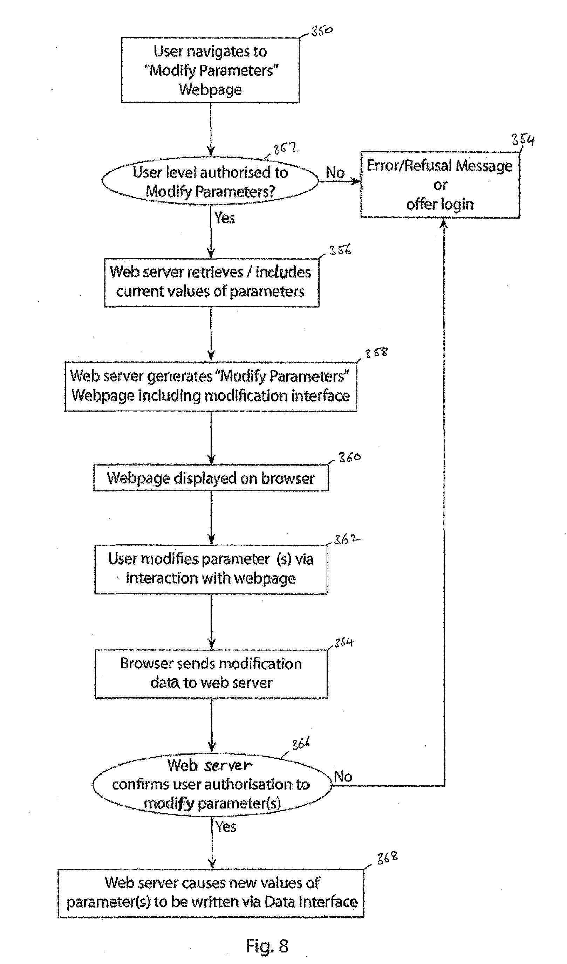

Figure 8 schematically illustrates a series of steps which are taken when a user navigates to the "modify parameters" webpage (step 350). When the user seeks to navigate to this webpage it is first determined (at step 352) if the user is logged in at a level authorised to modify these parameters. If the user is logged in at a level which is not authorised to do this (or not logged in at all) then the flow proceeds to step 354 where an error/refusal message can be presented or the user can be presented with a login opportunity. However if the user is already logged in at the level permitted to modify these parameters then the flow proceeds to step 356 where the webserver retrieves the current set of parameters and includes these in a webpage which it generates at step 358, including a modification interface (such as the buttons 224, 226, 228, 230 shown in Figure 5B). Having being transmitted to the device running the browser, the webpage is then displayed by that browser at step 360. The user modifies one or more parameters via interaction with the webpage at step 362 and once this is done the browser sends modification data to the webserver at step 364. As an additional security measure, at step 366, the web server confirms that the user is authorised to modify these parameters. If it is determined that a user does not have the authorisation to modify these parameters then the flow returns to step 354. Otherwise the flow proceeds to step 368 where the webserver causes the new values of these parameters to be written to their stored location in the electrically powered vehicle via the data interface.

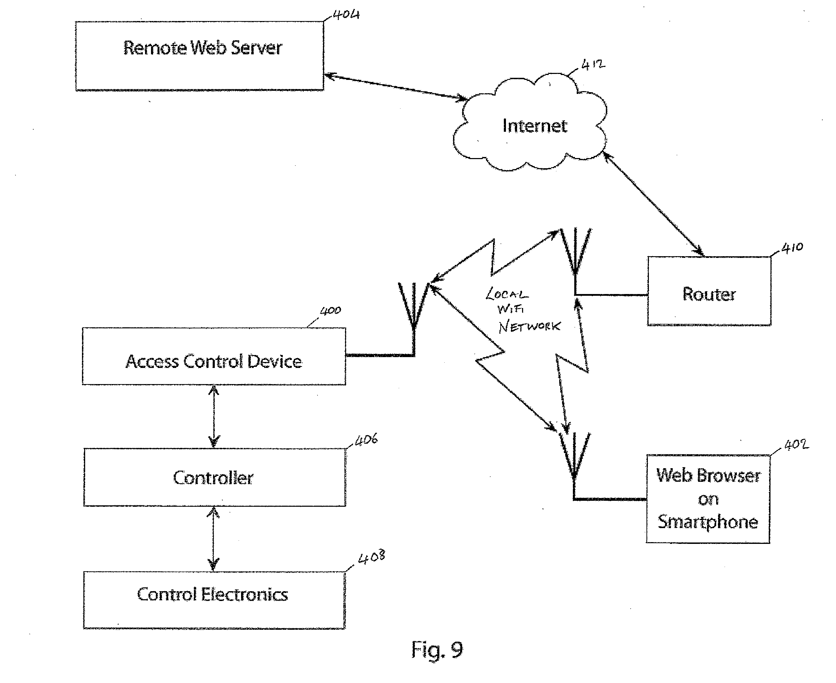

Figure 9 schematically illustrates an embodiment in which an access control device 400 interacts with both a web browser 402 running on a smart phone or smart device connected to the local Wi-Fi network and a remote webserver 404. This remote webserver 404 is, in this example, hosted by the manufacturer of the controller for the electrically powered vehicle. The access control device 400 interacts with the controller 406 and the further control electronics 408 in the manner described previously. Interaction with the remote server 404 takes place via a local router 410 which connects the access control device 400 to the remote webserver via the internet 412.

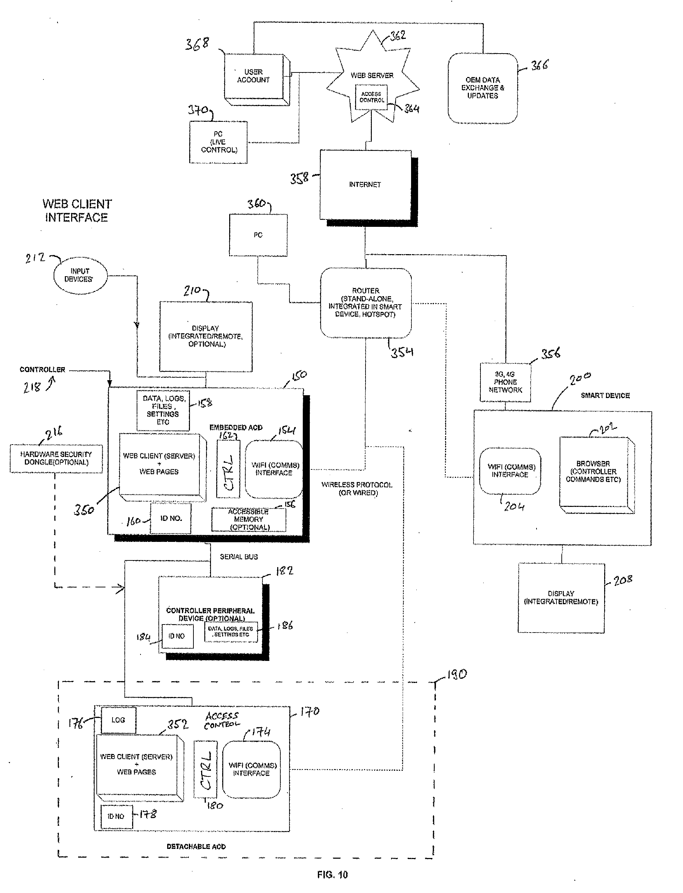

Figure 10 schematically illustrates more detail of the embodiment shown in Figure 9. Various components shown in Figure 10 are identical to those already discussed with reference to Figure 4 and for brevity are not further discussed here, and the reader is referred to Figure 4 and its accompanying description. A notable different within the access control devices 150,170 are that the web servers (152, 172 in Figure 4) in this embodiment (350, 352) are also configured to act as a web client. In essence, these components behave as a web server when interacting with the browser 202 of the smart device 200, but act as a web client when interacting with the remote webserver 362. Switching between these modes of operation may be activated by the user (e.g. button selection on the controller), or may be controlled by the smart device 200. It may also be triggered by the connection of a specific piece of hardware to the control system of the vehicle.

Whilst the access control device could communicate with the smart device 200 via a direct wireless protocol (or indeed via a wired connection) in the illustrated embodiment the communication takes place via a local router 354 which acts as a central hub for the local network. Accordingly, as illustrated a PC 360 may also be coupled to the router 354 via which a user may also open a browser and interact with one of the access control devices. Note that (as indicated in the box 354 in Figure 10) the router could alternatively be integrated into the smart device 200, or be a "hot spot" style of router, with which the access control device has opportunistically connected. This latter alternative means that an access control device in, say, an electric wheelchair can have regular contact with the remote web server 362, even when the wheelchair is on an excursion, since the access control device can make use of available hot spots to contact the remote server. Indeed the connection of the access control device to a particular wireless network can allow the vehicle's location to be determined.

In a wireless configuration, because of the higher bandwidth it affords, the smart device 200 will generally interact via its Wi-Fi communications interface 204 with the router 354 both to communicate with the access control device 150, 170 and to interact with the internet 358. However, the smart device 200 in Figure 10 also has the capability of accessing the internet 358 via the 3G or 4G phone network 356 and accordingly it is possible for the web client 350 in access control device 150 (or 352 in access control device 170) to access the internet 358 and the remote webserver 362 by direct wireless communication with the smart device and then via the 3G or 4G phone network 356. This for example affords possibility for a user (say a called-out engineer) to allow communication between the access control device and the remote web server even outside the range of a Wi-Fi network which may prove advantageous e.g. when a critical update or repair is available to download.

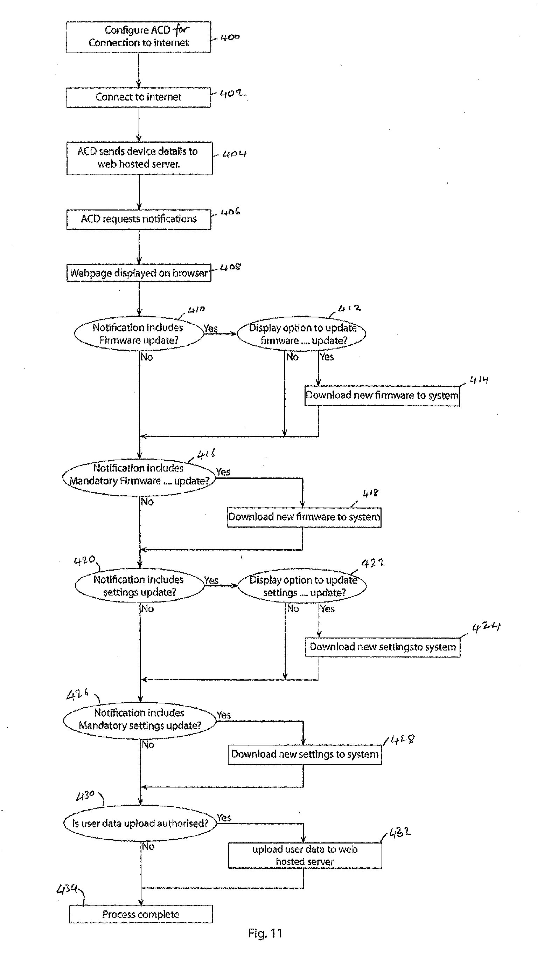

Once communication between the web client 350,352 is established with the remote webserver 362 (for example by providing the correct access information to the access control 364) then various kinds of interaction may take place as will be discussed in more detail with reference to the flow diagram in Figure 11. In particular these may involve data exchange permitted with the original equipment manufacturer and the download of updates that the original equipment manufacturer releases (item 366) or even allowing some degree of live control of the electrically powered vehicle via a remote PC 370). Messages to the user of the vehicle may also be communicated. The interaction with the webserver may generally be dictated by the configuration of a local user account 368 which may relate specifically to the particular access control device (150,170) or may relate to the user interacting with the browser 202 on the smart device 200. User account settings held at the remote server 362 can define permissions for various updates and data exchanges on an on-going basis as well as other user preferences and settings.

Whilst the communication with the remote server may be initiated by a user, it may also be configured to be automatic, for example when the electrically powered vehicle comes within range of a particular Wi-Fi network (e.g. that of the home of the user). Thus in this example each time the user returns home the vehicle can automatically "check in" with the remote server to upload usage/fault information and to request any available updates or messages.

Figure 11 schematically illustrates a series of steps taken when a user interacting with an access control device via a browser causes the access control device to interface with a remote webserver. At step 400, the user causes the access control device to be configured for connection to the internet e.g. for the Wi-Fi communications interface 154 of embedded access control device 150 to communicate with the router 354 as an internet gateway. Then at step 402 the connection to the internet is established and at step 404 the ACD sends device details (i.e. its ID number 160 to uniquely identify it) to the web hosted server 362 (at step 404). Firstly, the ACD then at step 406 requests any pending notifications from the webserver 362 and a corresponding webpage is returned which is displayed by the browser 202 of the smart device 200 (step 408) for the user to decide what further steps to allow (where such steps are optional).

At step 410 it is determined if the pending notifications available include a firmware update. If they do then at step 412 an option to accept this update is displayed to the user, which if accepted is carried out at step 414 wherein the webserver 362 passes this firmware update to the web client 350,352 which then causes it to be stored appropriately within the relevant component of the electrically powered vehicle (e.g. in the controller 218 for a controller firmware update). Thereafter the flow proceeds to step 416 where it is determined if the notification includes a mandatory firmware update. If it does, then this is downloaded at step 418 (without giving the user the option to refuse it). Then at step 420 if the notifications available include a settings update then the user is given the option at step 422 of accepting these and if accepted at step 424 they are downloaded. Next at step 426 if a mandatory settings update is included in the notification then at step 428 this is downloaded (without giving the user the option to refuse it). Finally at step 430 it is determined if a user data upload is authorised and if it is then at step 432 user data is uploaded to the webhosted server. This upload may for example comprise a log file (from log storage 158 or 176) which provides the manufacturer with useful information about the performance of the vehicle. The flow completes at step 434.

Although a particular embodiment has been described herein, it will be appreciated that the invention is not limited thereto and that many modifications and additions thereto may be made within the scope of the invention. For example, various combinations of the features of the following dependent claims could be made with the features of the independent claims without departing from the scope of the present invention.

### CLAUSES

Various aspects of the subject matter described herein are set forth for example, and without limitation, in the following numbered clauses:
1. An access control device for an electrically powered vehicle, said access control device comprising:
   a data interface configured to exchange data with at least one component of said electrically powered vehicle;
   a webserver configured to generate a webpage incorporating said data, wherein said webpage is formatted for viewing on a web browser; and
   a communication interface configured to provide said webpage to said web browser external to said electrically powered vehicle.
2. The access control device of clause 1, wherein said webserver is configured to provide additional webpages to said web browser, said additional webpages comprising user information related to said electrically powered vehicle.
3. The access control device of clause 1 or clause 2, wherein said access control device is configured to require user approval prior to allowing said data interface to exchange data with at said least one component of said electrically powered vehicle.
4. The access control device of any preceding clause, wherein said access control device further comprises a logging unit configured periodically to record data related to operation of said electrically powered vehicle, wherein said webserver is configured to generate a logging webpage incorporating said recorded data.
5. The access control device of clause 4, wherein said logging unit is configured to be programmed via said web browser.
6. The access control device of any preceding clause, wherein:
   said communication interface is further configured to communicate with a remote webserver; and
   said webserver is configured to exchange further data with said remote webserver via said communication interface.
7. The access control device of clause 6, wherein said exchange of further data with said remote webserver via said communication interface is controlled by said web browser.
8. The access control device of clause 6 or clause 7, wherein said exchange of further data with said remote webserver via said communication interface is routed via a device running said web browser.
9. The access control device of any of clauses 6 to 8, wherein said access control device is configured to seek user approval for said exchange of further data with said remote webserver.
10. An access control device for an electrically powered vehicle, said access control device comprising:
   data interface means for exchanging data with at least one component of said electrically powered vehicle;
   webserver means for generating a webpage incorporating said data, wherein said webpage is formatted for viewing on a web browser; and
   communication interface means for providing said webpage to said web browser external to said electrically powered vehicle.

## Claims

1. An access control device for an electrically powered vehicle, said access control device comprising:
a data interface configured to exchange data with at least one component of said electrically powered vehicle;
a webserver configured to generate a webpage incorporating said data, wherein said webpage is formatted for viewing on a web browser; and
a communication interface configured to provide said webpage to said web browser external to said electrically powered vehicle.

2. The access control device as claimed in claim 1, wherein said access control device is configured to be detachably connected to said electrically powered vehicle.

3. The access control device as claimed in claim 2, wherein said access control device is configured to be detachably connected to a control unit of said electrically powered vehicle.

4. The access control device as claimed in claim 3, wherein said access control device is configured, when connected to said control unit, to determine a type of said control unit and to cause said webserver to configure said webpage in dependence on said type.

5. The access control device as claimed in claim 1, wherein said access control device is comprised within a control unit of said electrically powered vehicle.

6. The access control device as claimed in any preceding claim, wherein said communication interface is configured to provide said webpage to said web browser via one of a wireless communication protocol, and a wired communication protocol.

7. The access control device as claimed in any preceding claim, wherein said webserver is configured to receive said data from said at least one component via said data interface.

8. The access control device as claimed in any preceding claim, wherein said webserver is configured to receive said data sent from said web browser via said communication interface and to provide said data to said at least one component via said data interface.

9. The access control device as claimed in any preceding claim, wherein said webserver is configured to restrict access to a selected webpage or portion of a selected webpage in dependence on an identified user level.

10. The access control device as claimed in claim 9, wherein said identified user level is determined by at least one of:
password entry; and
connection of a detachable authenticating device to said access control device or said electrically powered vehicle.

11. The access control device as claimed in any preceding claim, wherein said access control device is configured to store a unique identifier and to provide said unique identifier to said web browser upon request.

12. The access control device as claimed in any preceding claim, wherein said webserver is configured to provide an initialisation webpage to authenticate a device on which said web browser is running.

13. The access control device as claimed in any preceding claim, wherein said access control device further comprises a logging unit configured periodically to record data related to operation of said electrically powered vehicle, wherein said webserver is configured to generate a logging webpage incorporating said recorded data.

14. The access control device as claimed in any preceding claim, wherein:
said communication interface is further configured to communicate with a remote webserver; and
said webserver is configured to exchange further data with said remote webserver via said communication interface.

15. An access control method for an electrically powered vehicle, said access control method comprising the steps of:
exchanging data via a data interface with at least one component of said electrically powered vehicle;
generating a webpage incorporating said data, wherein said webpage is formatted for viewing on a web browser; and
providing said webpage via a communication interface to said web browser external to said electrically powered vehicle.
